# EUROPÄISCHE PATENTSCHRIFT

(11) **EP 1 752 852 B1**
(45) Veröffentlichungstag und Bekanntmachung des Hinweises auf die Patenterteilung: **25.06.2014**
(21) Anmeldenummer: 06008356.5
(22) Anmeldetag: 22.04.2006
(51) Int. Cl.: G05D 23/19, F24F 11/06

(54) **Verfahren zur Regelung der Temperatur des Mediums eines Heiz- und/oder Kühlsystems**
Method for regulating the temperature of the medium in a heating and/or cooling system
Procédé destiné au réglage de la température du caloporteur d'un système de chauffage et/ou de refroidissement

(30) Priorität: 05.08.2005 DE 102005037608
(43) Veröffentlichungstag der Anmeldung: 14.02.2007
(73) Patentinhaber: WILO SE, 44263 Dortmund (DE)
(72) Erfinder: Strelow, Günter, 44801 Bochum (DE); Kettner, Thorsten, Dr., 45711 Datteln (DE)
(74) Vertreter: Cohausz Hannig Borkowski Wißgott

(56) Entgegenhaltungen:
- EP-B1- 1 003 089
- DE-A1- 3 315 828
- DE-A1- 19 842 174
- GB-A- 2 038 036

## Beschreibung

Die Erfindung betrifft ein Verfahren zur Regelung der Temperatur des Mediums eines Heiz- und/oder Kühlsystems mit mehreren Wärmetauschern und wenigstens einem Heiz- und/oder Kühlaggregat, insbesondere zur Regelung der Vorlauftemperatur, wobei mehreren, insbesondere jedem Wärmetauscher ein Stellglied zugeordnet ist und wobei die Leistung des wenigstens einen Heiz/Kühlaggregates geregelt wird.

Bekanntermaßen werden Heiz- bzw. Kühlsysteme derart aufgebaut, dass in einem Kreislauf eines Mediums, d.h. entweder eines Heiz- oder eines Kühlmediums, ein Aggregat zum Heizen oder Kühlen dieses Mediums vorgesehen ist, um an anderer Stelle über Wärmetauscher bedarfsgerecht beispielsweise Räumen in einem Haus oder einer Wohnung Wärme zuzuführen oder auch Wärme zu entziehen. Es kann sich demnach bei solchen Systemen um Heizungssysteme, wie Zentralheizungen für Gebäude mit Heizkörpern und/oder Heizflächen, wie z.B. Fußbodenheizungen oder auch um Klimaanlagen zum Kühlen der Gebäude handeln.

Insbesondere mit Bezug auf Heizungsanlagen ist es bislang im Stand der Technik bekannt, in einem derartigen Heizungssystem eine zentrale Pumpe zur Umwälzung des Heizmediums, beispielsweise Wasser, vorzusehen und die Wärmeabgabe in den einzelnen Verbrauchseinheiten, also beispielsweise verschiedenen Räumen, dadurch zu regeln, dass den dort vorgesehenen Wärmetauschern, d.h. hier im Wesentlichen Heizkörpern, als Stellglied Regelventile vorgeschaltet sind, die raumtemperaturabhängig den Durchfluss des Heizmediums durch den entsprechenden Heizkörper begrenzen.

Darüber hinaus gibt es alternative Heizungssysteme von im Wesentlichen identischem Aufbau, wobei hingegen die einem jeweiligen Wärmetauscher bzw. Heizkörper zugeordneten raumtemperaturabhängig geführten Ventile, z.B. Thermostatventile ersetzt sind durch eine dem jeweiligen Heizkörper zugeordnete dezentrale Pumpe, so dass weiterhin auch die singulär üblicherweise in einem Heizungskreislauf vorgesehene zentrale Förderpumpe in Entfall kommen kann. Hierbei dient jede einem Heizkörper zugeordnete Pumpe als Stellglied im Sinne der Erfindung um den Durchfluss des Mediums durch eine Heizkörper zu regeln.

Hierbei sind die einem Heizkörper zugeordneten und insbesondere unmittelbar an diesem im Vorlauf angeordneten Pumpen ebenso raumtemperaturabhängig geregelt, d.h. es wird ebenso raumtemperaturabhängig die Durchflussmenge durch den Heizkörper geändert, was im Wesentlichen durch eine Änderung der Drehzahl einer derartigen Pumpe bzw. der Änderung der elektrischen Leistungsaufnahme erfolgen kann. Eine derartige dezentral angeordnete Pumpe übernimmt in derartigen Heizungssystemen dementsprechend die Aufgabe eines bislang an dieser Stelle vorgesehenen Ventils, z.B. Thermostatventils, d.h. es wird die Raumtemperatur erfasst und durch eine dezentrale oder auch zentrale Steuerung die Drehzahl der betreffenden Pumpe geändert, um ein Aufheizen oder Abkühlen gegenüber der erfassten Temperatur zu bewirken.

Aus der EP 1 003 089 B1 ist ein Verfahren zur Steuerung eines derartigen Heizungssystems bekannt, bei dem zur Steuerung der Temperatur des Mediums dieses Heizungssystems die Durchflüsse der jeweiligen, einem Wärmetauscher bzw. Heizkörper zugeordneten Pumpen kontinuierlich erfasst werden und davon abhängig über eine entsprechende Steuereinheit die Leistung eines Heizkessels bedarfsgerecht geändert wird.

Insbesondere bei der Installation derartiger gattungsgemäßer Heiz- und/oder Kühlsysteme, die mehrere Wärmetauscher, in einem Heizsystem dementsprechende Heizkörper aufweisen, wobei mehreren, insbesondere jedem Wärmetauscher eine Pumpe zugeordnet ist, hat es sich als problematisch herausgestellt, einen hydraulischen Abgleich durchzuführen, d.h. sicherzustellen, dass bei gegebenen Vorlauftemperaturen jeder Wärmetauscher in ausreichendem Maße mit dem Heiz- bzw. Kühlmedium durch die Pumpe versorgt wird, um bedarfsgerecht die Klimatisierung einer Nutzungseinheit, beispielsweise eines Raumes oder einer sonstigen gewünschten Zone, durchzuführen. Ist das System nicht hydraulisch abgeglichen, so kann es je nach Betriebsbedingung bei bestimmten Heizkörpern zu einer Unterversorgung oder auch zu einer Überversorgung mit Heizmedium kommen. Diese Problematik ist ebenso bei üblichen Ventilen als Stellglied gegeben.

Oftmals sind die hydraulischen Parameter eines derartigen Systems so unbestimmt, dass eine Einstellung der Parameter und insbesondere der Vorlauftemperatur zunächst anhand von Erfahrungswerten und gegebenenfalls mit einem zu großen Sicherheitszuschlag erfolgt, so dass das System mitunter nicht in einem optimalen Bereich läuft.

Aufgabe der Erfindung ist es demnach, ein Verfahren zur Regelung der Temperatur des Mediums eines Heiz- und/oder Kühlsystems der vorbeschriebenen gattungsgemäßen Art bereitzustellen, bei dem im Wesentlichen selbsttätig ein hydraulischer Abgleich durchgeführt wird, um so die optimale Wirkungsweise des Systems zu erreichen.

Diese Aufgabe wird erfindungsgemäß dadurch gelöst, dass von mehreren Stellgliedern, insbesondere von allen Stellgliedern, die einem jeweiligen Wärmetauscher zugeordnet sind, der gleiche Ist-Betriebsparameter, erfasst wird, um sodann dasjenige Stellglied zu ermitteln, dessen Ist-Betriebsparameter am nächsten an einer dem Stellglied zugeordneten z.B. oberen Stellgrenze, liegt, um die Temperatur des Mediums dann derart zu ändern, dass sich der Ist-Betriebsparameter dieses Stellgliedes in Richtung eines Soll-Betriebsparameters ändert, insbesondere diesen Soll-Betriebsparameter zumindest im Wesentlichen erreicht.

Bei einem bevorzugten Stellglied im Sinne der Erfindung kann es sich z.B. um eine Pumpe handeln, die einem Heizkörper zugeordnet ist, insbesondere unmittelbar an diesem im Vorlauf angeordnet ist. Der bevorzugt beobachtete und geregelte IST- bzw- Soll-Betriebsparameter kann in diesem Fall die Drehzahl einer solchen sogenannten dezentralen Pumpe sein, die z.B. meßtechnich erfassbar ist, bzw. an der Steuerelektronik einer solchen Pumpe abgegriffen werden kann. Eine solche Steuerelektronik kann dezentral in jeder Pumpe oder auch zentral für einige oder alle Pumpen vorgesehen sein.

In äquivalenter Weise ist es ebenso möglich, andere Betriebsparameter der Pumpen heranzuziehen, wie beispielsweise die elektrische Leistungsaufnahme, den Differenzdruck über Druck- und Saugseite oder andere Parameter, die einen Rückschluss auf den aktuellen Durchfluss des geförderten Mediums durch die Pumpe bzw. den nachgeordneten Wärmetauscher und insbesondere Heizkörper zulässt.

In alternativer Weise können als Stellglieder auch Ventile, z.B. gesteuerte Ventile oder auch Thermostatventile eingesetzt werden. Ist- und Soll-Betriebsparameter sind in diesem Fall die Öffnung eines Ventils bzw. dessen Hub.

Gemäß den vorgenannten Stellgliedern kann es sich bei der Stellgrenze bei dezentralen Pumpen z.B. um eine gewünschte maximale Drehzahl einer Pumpe handeln und bei Ventilen z.B. um eine gewünschte maximale Öffnung des Ventils, also jeweils eine obere Stellgrenze. Hierbei kann jedem Stellglied individuell eine eigene, z.B. obere Stellgrenze zugeordnet sein, oder es kann für einige, ggfs alle Stellglieder auch eine gemeinsame z.B. obere Stellgrenze geben. Weiterhin gibt es bei jedem Stellglied auch eine konstruktionsbedingte maximal mögliche Stellgrenze. Für das erfindungsgemäße Verfahren kann ebenso eine solche konstruktionsbedingt vorgegebene Stellgrenze herangezogen werden. Eine gewünschte Stellgrenze kann von der konstruktionsbedingten abweichen.

In gleicher Weise kann es auch weitere, z.B. untere minimale gewünschte bzw. konstruktionsbedingt mögliche Stellgrenzen gegeben, die im Rahmen der Erfindung bevorzugt mitberücksichtigt werden können.

Um die Ist-Betriebsparameter aller Stellglieder erfassen und bewerten zu können, welches Stellglied an nächsten an seiner individuellen z.B. oberen Stellgrenze arbeitet kann es vorgesehen sein, dass die Stellglieder vernetzt sind und ggfs die Parameter aus den Stellgliedern abgefragt bzw. in diesen gemessen werden. Ebenso kann es vorgesehen sein, dass die Stellglieder alle zentral gesteuert werden und in der Steuerung die aktuelle Information über den jeweiligen Ist-Betriebsparameter vorliegt. Darüber hinaus können weitere Möglichkeiten gegeben sein, um Kenntnis über einen Ist-Betriebsparameter eines Stellgliedes zu erhalten.

In bevorzugter Weise wird nachfolgend eine Ausführung des erfindungsgemäßen Verfahrens anhand der Drehzahl von dezentralen Pumpen als Regelgröße und der Vorlauftemperatur eines Heizungssystems als Stellgröße beschrieben, wobei in äquivalenter Weise diese Ausführung sowohl auf andere Stellglieder, andere Betriebsparameter eines Heizungssystems als auch auf ein entsprechendes Kühlsystem übertragbar sind und analog, gegebenenfalls mit invertierten Vorzeichen gelten.

Gemäß der Erfindung wird zunächst aus allen betriebenen dezentralen Pumpen diejenige ermittelt, die mit dem betrachteten Ist-Betriebsparameter am nächsten an Ihrer individuellen z.B. oberen Stellgrenze läuft. Hierbei handelt es sich um die ungünstigste Pumpe des Gesamtsystems. Gemäß der Erfindung wird die Vorlauftemperatur des Heizmediums angepasst, damit aufgrund der Regelung sodann sich der Ist-Betriebsparameter in Richtung eines Soll-Betriebsparameters ändert.

Diese Änderung kann aufgrund einer autarken dezentralen oder auch zentralen Regelung erfolgen, insbesondere die unabhängig vom erfindungsgemäßen Verfahren laufen kann. Aufgrund der Ermittlung der ungünstigsten Pumpe und der Anpassung der Vorlauftemperatur anhand der Betriebparameter dieser Pumpe werden automatisch auch alle anderen Pumpen Ihre Betriebparameter entsprechend der zentralen oder dezentralen Regelung ändern. GGfs. kann sich durch bestimmte Einflüsse, z.B. Nutzereingriff oder Änderung der inneren Lasten (Sonneneinfluß, geöffnetes Fenster etc.), die Bewertung und Feststellung der ungünstigsten Pumpe ändern.

Gemäß dem Verfahren kann es insbesondere vorgesehen sein, dass bei einer ermittelten Pumpendrehzahl einer ungünstigsten Pumpe, die über einer gewünschten Solldrehzahl liegt, die Vorlauftemperatur erhöht wird, wodurch sich die Pumpendrehzahl absenkt und insbesondere dass bei einer ermittelten Pumpendrehzahl, die unter einer gewünschten Solldrehzahl liegt, die Vorlauftemperatur verringert wird, wodurch sich die Pumpendrehzahl erhöht, wobei sich wie vorgenannt, dies auch auf die übrigen Pumpen auswirkt. Diese gewünschte Solldrehzahl entspricht dem Soll-Betriebsparameter, der bevorzugt unterhalb einer gewünschten maximalen Stellgrenze oder der konstruktionsbedingt vorgegebenen maximalen Stellgrenze, also hier der Drehzahl gewählt wird.

In beiden Fällen wird erreicht, dass bezogen auf das beschriebene Heizsystem ein genügend großer Wärmeeintrag in die betrachtete Nutzungseinheit möglich ist, wobei jeweils dafür Sorge getragen wird, dass die betrachtete Pumpe hinsichtlich ihrer Drehzahl in einem optimalen Bereich, d.h. bei der gewünschten Soll-Drehzahl, also unter Ihrer oberen Stellgrenze bzw. in einer Umgebung dieser Soll-Drehzahl läuft, um sowohl nach oben als auch nach unten hin bei einer Bedarfsänderung eine Drehzahländerung vornehmen zu können.

Eine derart erfindungsgemäß geregelte Pumpe wird demnach sowohl in der Drehzahl nach oben als auch nach unten einen Reservebereich aufweisen, um auf sich aktuell ändernde Gegebenheiten reagieren zu können. Somit wird bei jeder Pumpe der Bedarf gedeckt und der hydraulische Abgleich ist erreicht bzw. bleibt erhalten. Auch ist dieses Verfahren besonders vorteilhaft, da über die sodann immer gegebene Möglichkeit der schnellen Drehzahländerung zur Bedarfsanpassung eine besonders schnelle Reaktion auf geänderten Bedarf möglich ist.

Hierbei kann es vorgesehen sein, dass die Temperatur des Mediums durch eine entsprechende Ansteuerung eines Heizaggregates in einem Heizungssystem, also beispielsweise einem Heizungskessel oder von einem Kühlaggregat in einer Klimaanlage erst dann geändert wird, wenn allgemein betrachtet der erfasste Ist-Betriebsparameter einer Pumpe von einem Soll-Betriebsparameter um ein vorgegebenes Maß abweicht.

Hierdurch kann ein ununterbrochenes Regeln verhindert werden, d.h. ein Nachregeln der Temperatur des Mediums erfolgt lediglich dann, wenn der gemessene Ist-Parameter in einen Bereich gerät, in dem bei voraussichtlichen zukünftigen Bedarfsänderungen eine entsprechende Reaktion der Pumpe, beispielsweise durch Änderung ihrer Drehzahl nicht mehr in ausreichender Weise sicher gestellt ist.

So kann beispielsweise eine Solldrehzahl von etwa 70 bis 90 %, bevorzugt von ca. 80 % der maximal möglichen oder der gewünschten maximalen Drehzahl, also der Stellgrenze einer Pumpe als geeigneter Soll-Betriebsparameter ausgewählt sein. Der Soll-Betriebsparameter kann auch anhand anderer Kriterien, wie später erläutert festgelegt sein.

Da gemäß dem Verfahren die Änderung der Temperatur des Mediums, also insbesondere die Vorlauftemperatur des Heizmediums, anhand derjenigen Pumpe erfolgt, die am nächsten an der Stellgrenze läuft also z.B. die aktuell höchste Drehzahl aufweist, wird jederzeit sicher gestellt, dass nach einer Regelung und Änderung der Betriebsparameter alle Pumpen in einem günstigen Betriebsbereich arbeiten, in dem eine kurzfristige Reaktion auf Bedarfsänderungen möglich ist.

In alternativer Weise wird nachfolgend eine Ausführung des erfindungsgemäßen Verfahrens anhand der Stellung eines Ventilstellgliedes eines Ventils am Heizkörper als Regelgröße und der Vorlauftemperatur eines Heizungssystems als Stellgröße beschrieben, wobei in äquivalenter Weise ebenso diese Ausführung sowohl auf andere Betriebsparameter eines Heizungssystems als auch auf ein entsprechendes Kühlsystem übertragbar sind und analog, gegebenenfalls mit invertierten Vorzeichen gelten.

Hierbei kann z.B. durch wenigstens einen Sensor an einem Ventil ein IST-Betriebsparameter bzgl. des aktuellen Öffnungsgrades dieses Ventiles ermittelt werden. Ebenso kann der Ist-Betriebsparameter aus einer Steuerung bekannt sein. Betrachtet wird hierbei dasjenige Ventil, dessen Öffnungsgrad am nächsten an der oberen Stellgrenze, also an der maximal möglichen oder einer maximalen gewünschten Öffnung liegt. Dieses Ventil ist im Rahmen des Verfahren aus allen Ventilen zu ermittlen.

Überschreitet der gemessene Öffnungsgrad dieses Ventiles, welches als ungünstigstes Ventil bezeichnet werden kann, ein vorgegebenes bzw. gewünschtes Maß, z.B. 80 % der maximalen möglichen/gewünschten Öffnung, so wird erfindungsgemäß die Vorlauftemperatur erhöht, wodurch sich der Öffnungsgrad verringert, da das Ventil einen durch die Temperaturerhöhung erhöhten Wärmeeintrag in die Nutzungseinheit bzw. eine steigende Raumtemperatur feststellt. Das Ventil, so wie auch alle anderen Ventile, reagiert im Rahmen seiner autarken zentralen oder dezentralen Regelung auf die geänderte Vorlauftemperatur.

Die erfindungsgemäße Regelung kann weiterhin derart sein, dass bei Unterschreitung eines gewünschten Öffnungsgrades die Vorlauftemperatur verringert wird, wodurch die das betrachtete Ventil öffnet. Insbesondere beim Einsatz von Ventilen, welcher eine zentrale Pumpe voraussetzt, kann es ergänzend vorgesehen sein, die zentrale Pumpe zu regeln, um neben der Änderung der Temperatur des Mediums schnell auf eine Bedarfsänderung zu reagieren.

Die vorgenannten Regelungen einer Pumpe oder eines Ventiles ziehen dabei auch immer Änderungen an den anderen Pumpen oder Ventilen nach sich. Hierbei kann grundsätzlich auch ein Mischverbau sowohl von Pumpen als auch gleichzeitig von Ventilen vorgesehen sein.

Mit Bezug auf alle möglichen Ausführungen kann es vorgesehen sein, dass es je eine obere und unteren Stellgrenze für das jeweils betrachtete Stellglied gibt. So kann beispielsweise bei den dezentralen Pumpen und äquivalent bei Ventilen sowohl die Pumpe mit der höchsten Drehzahl und/oder die mit der geringsten Drehzahl überwacht werden, also die Pumpe die am nächsten an einer oberen oder unteren Stellgrenze läuft. Es können also im Rahmen des erfindungsgemäßen Verfahren sowohl obere als auch untere Stellgenzen bei allen möglichen Stellgliedern betrachtet werden.

Der Soll-Betriebsparameter eines Stellgliedes, z.B. einer Pumpe oder eines Ventiles kann aufgrund mehrere Kriterien gegeben sein.

Z.B. kann es eine feste Vorgabe geben, wie vorgenannt z.B. 70 bis 90 %, bevorzugt 80% einer oberen Stellgrenze, wie z.B. der maximalen gewünschten oder möglichen Drehzahl einer Pumpe.

Bei festen Vorgaben kann es jedoch Bedingungen geben, bei denen wenigstens eines von allen Stellgliedern eine bevorzugt ergänzend zu betrachtende weitere Stellgrenze, z.B. untere Stellgrenze überschreiten würde. Mit Bezug auf das Beispiel von Pumpen und betrachteten Drehzahlen, kann dies bedeuten, dass bei einer Regelung der ungünstigsten Pumpe auf z.B. 70 bis 90%, bevorzugt z.B. 80% der maximalen gewünschten/möglichen Drehzahl eine andere Pumpe eine mindestens gewünschte oder konstruktiv benötigte minimale Drehzahl, also untere Stellgrenze unterschreiten würde und z.B. somit den Betrieb einstellt, da unter einer Mindestdrehzahl keine Förderung des Mediums stattfindet.

Um dies zu verhindern kann es vorgesehen sein, dass ein Stellglied, z.B. eine Pumpe, welches die weitere, z.B. untere Stellgrenze überschreitet, intermittierend betrieben wird. Ein Pumpe könnte so getaktet an- und ausgeschaltet werden, so dass sich im Mittel eine Drehzahl unterhalb der minimalen Drehzahl ergibt.

Als bevorzugte Alternative zu einem intermittierenden Betrieb eines Stellglieds kann es auch vorgesehen sein, den Soll-Betriebsparameter anzupassen, mit Bezug auf genannten Beispiel zu erhöhen, so dass auch die Pumpe mit niedrigster Drehzahl noch oberhalb der minimalen gewünschten oder möglichen Drehzahl kontinuierlich laufen kann. Dadurch lässt sich z.B. eine größere Temperaturstabilität oder gleichmäßigere Temperaturverteilung z.B. in Flächenheizkörpern erreichen.

Ebenso kann es alternativ oder kumulativ mit vorgenannten Ausführungen vorgesehen sein, dass eine Wahl des Soll-Betriebsparameters anhand der Energiebilanz des Gesamtsystem und/oder zumindest aller Stellglieder vorgenommen wird, um sodann einen Soll-Betriebsparameter als Regelziel zu wählen, bei dem der Gesamtenergieverbrauch minimal oder zumindets nach bestimmten Kriterien optimal ist.

Im erfindungsgemäßen Verfahren kann es vorgesehen sein, dass bei Betrachtung eines Heizsystems ein vorlauftemperaturreduzierter Betrieb eintreten kann, z.B. ein Nachtbetrieb, bei dem die Vorlauftemperatur reduziert, ggfs. ein Kessel ausgeschaltet ist.

Es können somit Aufheizphasen vorkommen, z.B. bei Übergang von Nacht- in Tagbetrieb, bei dem wenigstens ein Nutzungsbereich aufgeheizt werden soll.

Hierbei würden zumindest die Stellglieder der betroffenen Nutzungsbereiche, ggfs alle Stellglieder bei konventioneller Regelung Ihre obere Stellgrenze anfahren, um maximalen Wärmeeintrag zu erreichen. Z.B. würden Pumpen auf maximale Drehzahl und Ventile auf maximale Öffnung gestellt sein. Hierbei ginge der hydraulische Abgleich verloren.

Um dies in einem solchen Fall zu verhindern kann es ergänzend gemäß der Erfindung vorgesehen sein, dass zumindest für die betroffenen Stellglieder, ggfs, für alle Stellglieder in der Vergangenheit gespeicherte Betriebsparameter eingestellt werden, bei denen ein stabiler Regelzustand erreicht wurde. So kann bei Beibehaltung des hydraulischen Abgleichs die Aufheizung erfolgen. GGfs können die Betriebsparameter um ein bestimmtes Maß über die gespeicherten Betriebsparameter erhöht werden.

Es können alternativ oder kumulativ mit der vorherigen Ausführung die Betriebsparameter auf einen Bereich unterhalb einer oberen gewünschten/möglichen Stellgrenze begrenzt werden und/oder es kann eine Einstellung der Betriebsparameter zum Aufheizen anhand einer Prioritätenvergaben der Nutzungszonen bzw. der Stellglieder erfolgen. Nach oder am Ende einer solchen Aufheizphase kann ein betrachtetes Gesamtsystem in die vorbeschriebene erfindungsgemäße Regelung übergehen.

Das erfindungsgemäße Verfahren wird bevorzugt in einer Regelschleife durchgeführt, so dass fortwährend sichere Betriebsbedingungen im System gewährleistet werden. Hierbei kann ergänzend die Vorlauftemperatur noch in Abhängigkeit von einer Außentemperatur geregelt werden, was im Wesentlichen einer bekannten Witterungsführung entspricht, wobei jedoch sodann die Vorlauftemperatur nicht anhand einer vorgegebenen Heizkurve verstellt wird, sondern sich in einem Regelbereich unter-/oberhalb einer Heizkurve befinden kann.

Ein Ausführungsbeispiel der Erfindung ist in den nachfolgenden Figuren näher erläutert. Es zeigen:
- Figur 1: die Änderung der Drehzahl einer betrachteten Pumpe und einer daraus resultierende Änderung der Vorlauftemperatur in einem Heizungssystem
- Figur 2: die Darstellung eines möglichen Regelbereichs bei einer Außentemperatur geführten Vorlauftemperatur
- Figur 3: konkret erreichte Vorlauftemperaturen innerhalb einer Heizperiode unterhalb der Heizkurve gemäß Figur 2

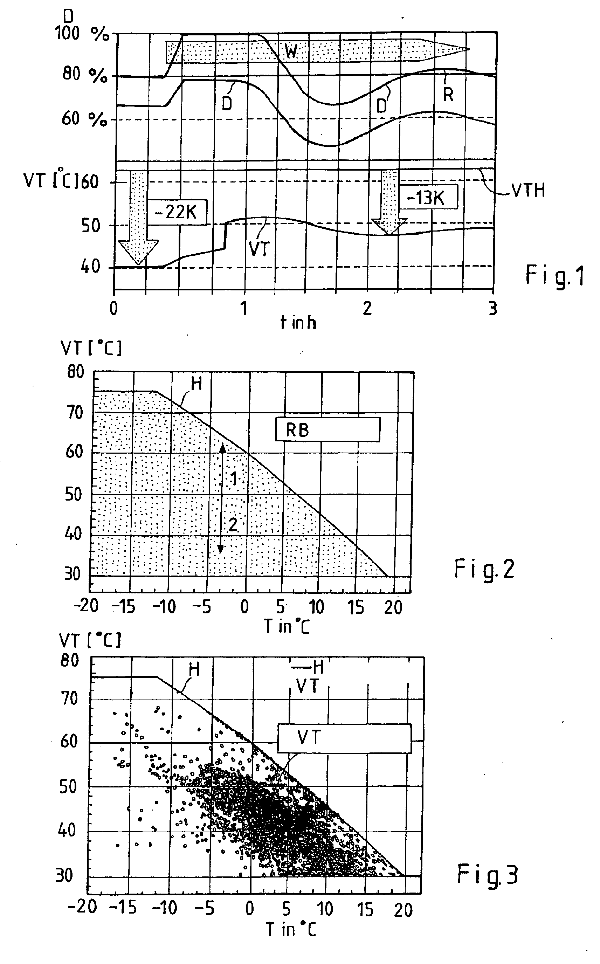

In der Figur 1 ist zu erkennen, dass die Drehzahl D einer Pumpe als Betriebsparameter zur Durchführung des erfindungsgemäßen Verfahrens herangezogen wird. Hierbei wird als Regelziel R eine Soll-Drehzahl von 80% der maximalen Drehzahl (obere Stellgrenze) einer Pumpe festgelegt. Dies bedeutet, dass in einem vorbeschriebenen System von mehreren Wärmetauschern, denen je dezentrale Pumpen zugeordnet sind, diejenige Pumpe mit der maximalen Drehzahl möglichst die vorgegebene Solldrehzahl von 80% der Maximaldrehzahl nicht dauerhaft über- oder unterschreiten soll.

Erkennbar ist in der oberen Kurve des Drehzahlverlaufs der Figur 1, dass in dem beobachteten Zeitbereich von etwa drei Stunden nach ca. 0,5 Stunden ein erhöhter Wärmebedarf W in einer Nutzungseinheit auftritt, der z.B. dadurch hervorgerufen sein kann, dass im Winter ein Fenster geöffnet wurde.

Den damit einhergehenden Temperaturabfall in der Nutzungseinheit wird von der dezentralen Pumpe des betrachteten Wärmetauschers/Heizkörpers festgestellt, so dass zur Deckung des erhöhten Wärmebedarfs die Pumpe automatisch aufgrund ihrer zentralen oder dezentralen Regelung die Drehzahl von der Solldrehzahl 80%, auf in diesem Beispiel bis zu 100%, d.h. bis zur Maximaldrehzahl erhöht, um eine Aufheizung der ausgekühlten Nutzungseinheit, beispielsweise eines Wohnraumes, zu gewährleisten.

Bei diesem Betriebspunkt ist festzustellen, dass die konkret betrachtete (die am ungünstigsten laufende) dezentrale Pumpe außerhalb ihres optimalen Bereichs läuft, da gegebenenfalls bei einer weiterhin erhöhten Wärmenachfrage keine darüber hinausgehende Erhöhung der Drehzahl möglich ist und demnach diese Wärmenachfrage unbeantwortet bleiben muss. Auch kann es sein, dass die Pumpe für die Aufheizung der betrachteten Nutzungseinheit so viel Massenstrom anfordert, dass andere Nutzungseinheiten und somit Pumpen unterversorgt sind.

Bezogen auf das hier betrachtete Beispiel ist festzustellen, dass hier diejenige Pumpe betrachtet wurde, die am nächsten an der maximalen Drehzahl läuft, was automatisch bedeutet, dass sämtliche anderen dezentralen Pumpen des betrachteten Systems deutlich unterhalb der hier dargestellten Drehzahlen arbeiten und somit immer einen ausreichenden Drehzahlregelbereich aufweisen, um bedarfsgerecht auf Wärmeanforderungen oder einen Wärmeüberschuss, z.B. durch Sonneneinstrahlung reagieren zu können.

Um zu erreichen, dass das Regelziel einer gewünschten Solldrehzahl von z.B. 80% erneut in dem Gesamtheizungssystem auch bei der für die Regelung betrachteten Pumpe erzielt wird, ist es hier erfindungsgemäß vorgesehen, die Vorlauftemperatur VT im Beispiel beginnend ab einer Zeit von t=0,5 Stunden zu erhöhen, um so zu gewährleisten, dass auch durch die Erhöhung der Vorlauftemperatur VT der erhöhte Wärmebedarf, der bislang durch die erhöhte Drehzahl D bedient wurde, befriedigt werden kann.

Durch die Erhöhung der Vorlauftemperatur VT, die etwa bei t=1,15 Stunden ihr Maximum in der Figur 1 erreicht hat, wird die Pumpe sodann aufgrund ihrer autarken temperaturgeführten Drehzahlregelung automatisch die Drehzahl D verringern, wodurch hier in der Darstellung gemäß der Figur 1 zunächst eine überschießende Regelung zu Drehzahlen D unterhalb des Soll-Wertes von 80% erzielt wird und sich im Laufe des in einer Schleife befindlichen Regelverfahrens die Vorlauftemperatur VT derart durch Steuerung der Leistung des Heizkessels einpendelt, dass das Regelziel von 80% der Maximaldrehzahl auch bei der hier betrachteten Pumpe erzielt wird.

In der Figur 1 zeigt die Kurve der Vorlauftemperatur VT z.B. einen mittleren Wert an. In der Praxis kann die Vorlauftemperatur bei einem intermittierenden Heizkesselbetrieb um diese jeweiligen mittleren Werte schwanken.

Ergänzend kann in dem Verfahren vorgesehen sein, dass eine Witterungsführung der Vorlauftemperatur anhand der Außentemperaturen T vorgesehen ist, wobei hier in der Figur 2 der grau schattierte Regelbereich RB unterhalb der dargestellten Heizkurve H den möglichen Bereich darstellt, in dem die Vorlauftemperatur VT angehoben 1 (wodurch die Drehzahl D fällt) oder abgesenkt 2 (wodurch die Drehzahl D steigt) werden kann, um so die gewünschte Drehzahl der Pumpe dem Regelziel anzunähern. Hierbei ist die Regelgröße die Drehzahl der jeweils "ungünstigsten" Pumpe (z.B. 80% der Maximaldrehzahl) und die Stellgröße die Vorlauftemperaturabsenkung (Differenz zwischen Heizkurve und Sollwert). Auch in der Figur 1 ist die maximale Vorlauftemperatur VTH gemäß der Heizkurve als obere konstant gerade durchgezogene Linie bei etwa 62 Grad Celsius zu erkennen. Diese gemäß der Heizkurve vorgegebene Vorlauftemperatur VTH wird von dem System niemals überschritten.

Die Figur 3 zeigt in einer konkreten Darstellung den möglichen Regelbereich unterhalb der Heizkurve H die gemäß dem Verfahren optimalen Vorlauftemperaturen VT, die erzielt wurden, um bei jedweder Außentemperatur T das jeweilige Regelziel von hier 80% der Maximaldrehzahl bei derjenigen Pumpe zu erzielen, die am nächsten an der Maximaldrehzahl läuft.

Das hier beschriebene Ausführungsbeispiel anhand eines Heizungssystems mit Heizungskesseln, Heizkörpern und jeweils dezentralen Pumpen kann ohne Weiteres übertragen werden in analoger Weise auch auf Kühlsysteme sowie andere mögliche Betriebsparameter als die hier beschriebene Drehzahl, wie beispielsweise Leistungsaufnahme oder Differenzdruck bei der jeweiligen Pumpe.

Es wird erkennbar erreicht, dass bei der Vielzahl der hier eingesetzten dezentralen Pumpen aufgrund der Betrachtung der jeweiligen ihrer Stellgrenze nächstkommenden Pumpe das Gesamtsystem mit allen Pumpen in einem optimalen Bereich gefahren werden kann, so dass das System selbst seinen hydraulischen Abgleich im Betrieb durchführt.

## Patentansprüche

1. Verfahren zur Regelung der Temperatur des Mediums eines Heiz- und/oder Kühlsystems mit mehreren Wärmetauschern und wenigstens einem Heiz- und/oder Kühlaggregat, insbesondere zur Regelung der Vorlauftemperatur, wobei mehreren, insbesondere jedem Wärmetauscher ein Stellglied zugeordnet ist und wobei die Leistung des wenigstens einen Heiz-/Kühlaggregates geregelt wird, **dadurch gekennzeichnet, dass**
a. von mehreren Stellgliedern dergleiche IST-Betriebsparameter, erfasst wird,
b. dasjenige Stellglied ermittelt wird, dessen IST-Betriebsparameter am nächsten an einer dem Stellglied zugeordneten Stellgrenze liegt und
c. die Temperatur des Mediums derart geändert wird, dass sich der IST-Betriebsparameter dieses Stellgliedes in Richtung eines SOLL-Betriebsparameters ändert, insbesondere diesen SOLL-Betriebsparameters zumindest im wesentlichen erreicht,
d. es sich bei einem Stellglied um eine Pumpe handelt.

2. Verfahren nach Anspruch 1, **dadurch gekennzeichnet, dass** die Temperatur des Mediums erst dann geändert wird, wenn der IST-Betriebsparameter eines Stellgliedes vom Soll-Betriebsparameter um ein vorgegebenes Maß abweicht, insbesondere wobei der Soll-Betriebsparameter zu 70-90%, bevorzugt 80% der Stellgrenze gewählt ist.

3. Verfahren nach einem der vorherigen Ansprüche, **dadurch gekennzeichnet, dass** es sich bei dem SOLL- und IST-Betriebsparameter um die Drehzahl der Pumpe und bei der Stellgrenze um die maximal mögliche oder maximale gewünschte Drehzahl der Pumpe handelt.

4. Verfahren nach Anspruch 3, **dadurch gekennzeichnet, dass** bei einer ermittelten Pumpendrehzahl, die über einer gewünschten Soll-Drehzahl liegt, die Vorlauftemperatur erhöht wird, wodurch sich die Pumpendrehzahl absenkt und dass bei einer ermittelten Pumpendrehzahl, die unter einer gewünschten Soll-Drehzahl liegt, die Vorlauftemperatur verringert wird, wodurch sich die Pumpendrehzahl erhöht.

5. Verfahren nach einem der vorherigen Ansprüche, **dadurch gekennzeichnet, dass** ein Soll-Betriebsparameter gegeben ist aus:
a. Einer festen Vorgabe oder
b. Einer Berechnung unter Berücksichtigung der Energiebilanz aller Stellglieder und/oder eines Gesamtsystem und/oder
c. Einer Berechnung, so dass alle Stellglieder eine minimale mögliche/gewünschte Stellgrenze nicht unterschreiten.

6. Verfahren nach einem der vorherigen Ansprüche, **dadurch gekennzeichnet, dass** im Aufheizfall, insbesondere bei einem Übergang von einer Nachtabsenkung in den Tagbetrieb, die Betriebsparameter wenigstens einer Teilanzahl aller Stellglieder gewählt werden anhand
a. von gespeicherten Betriebsparametern der Vergangenheit, insbesondere als ein stabiler Zustand erreicht war und/oder
b. Begrenzung auf einen Betriebparameter unterhalb einer maximal möglichen oder maximalen gewünschen Stellgrenze und/oder anhand einer Prioritätenvorgabe der Stellglieder.

7. Verfahren nach Anspruch 6, **dadurch gekennzeichnet, dass** die gespeicherten Betriebsparameter um ein vorbestimmtes Maß überschritten werden.

8. Verfahren nach einem der vorherigen Ansprüche, **dadurch gekennzeichnet, dass** es in einer Regelschleife durchgeführt wird.

9. Verfahren nach einem der vorherigen Ansprüche, **dadurch gekennzeichnet, dass** die Vorlauftemperatur ergänzend in Abhängigkeit von der Außentemperatur geregelt wird.

## Claims

1. Method for controlling the temperature of the medium of a heating and cooling system comprising a number of heat exchangers and at least one heating and/or cooling unit, in particular for controlling the flow temperature, an actuating element being assigned to multiple heat exchangers, in particular to each heat exchanger, and the output of the at least one heating/cooling unit being controlled, **characterized in that**
a. the same ACTUAL operating parameter is detected from multiple actuating elements,
b. the actuating element with the closest ACTUAL operating parameter to an actuating limit assigned to the actuating element is determined and
c. the temperature of the medium is changed in such a way that the ACTUAL operating parameter of this actuating element is changed in the direction of a SET operating parameter, in particular this SET operating parameter is at least substantially achieved,
d. an actuating element takes the form of a pump.

2. Method according to Claim 1, **characterized in that** the temperature of the medium is only changed when the ACTUAL operating parameter of an actuating element deviates from the set operating parameter by a predetermined amount, the set operating parameter being chosen in particular as 70-90%, preferably 80%, of the actuating limit.

3. Method according to one of the preceding claims, **characterized in that** the SET and ACTUAL operating parameter is the speed of the pump and the actuating limit is the maximum possible or maximum desired speed of the pump.

4. Method according to Claim 3, **characterized in that**, when there is a determined pump speed that lies above a desired set speed, the flow temperature is raised, whereby the pump speed decreases, and **in that**, when there is a determined pump speed that lies below a desired set speed, the flow temperature is lowered, whereby the pump speed increases.

5. Method according to one of the preceding claims, **characterized in that** a set operating parameter is constituted by:
a. a fixed specification or
b. a calculation that takes into account the energy balance of all the actuating elements and/or of an entire system and/or
c. a calculation such that all of the actuating elements do not go below a minimum possible/desired actuating limit.

6. Method according to one of the preceding claims, **characterized in that**, in the case of heating up, in particular in the case of a transition from a nighttime lowering to daytime operation, the operating parameters of at least a partial number of all the actuating elements are chosen on the basis of
a. stored operating parameters from the past, in particular when a stable state was achieved, and/or
b. limitation to an operating parameter below a maximum possible or maximum desired actuating limit and/or on the basis of a specification of priorities of the actuating elements.

7. Method according to Claim 6, **characterized in that** the stored operating parameters are exceeded by a predetermined amount.

8. Method according to one of the preceding claims, **characterized in that** it is carried out in a control loop.

9. Method according to one of the preceding claims, **characterized in that** the flow temperature is additionally controlled in dependence on the outside temperature.

## Revendications

1. Procédé de régulation de la température du fluide d'un système de chauffage et/ou de refroidissement comprenant plusieurs échangeurs de chaleur et au moins une unité de chauffage et/ou de refroidissement, en particulier pour la régulation de la température à l'entrée, un actionneur étant associé à plusieurs, et en particulier à chacun des échangeurs de chaleur, et la puissance de l'au moins une unité de chauffage/refroidissement étant régulée, **caractérisé en ce que**
a. l'on détecte le même paramètre de fonctionnement INSTANTANÉ de plusieurs actionneurs,
b. l'on détermine l'actionneur dont le paramètre de fonctionnement INSTANTANÉ est le plus proche d'une limite de réglage associée à l'actionneur et
c. la température du fluide est variée de telle sorte que le paramètre de fonctionnement INSTANTANÉ de cet actionneur varie dans le sens d'un paramètre de fonctionnement de CONSIGNE, notamment atteigne au moins sensiblement ce paramètre de fonctionnement de CONSIGNE,
d. l'un des actionneurs est une pompe.

2. Procédé selon la revendication 1, **caractérisé en ce que** la température du fluide n'est variée que si le paramètre de fonctionnement INSTANTANÉ d'un actionneur s'écarte du paramètre de fonctionnement de consigne d'une grandeur prédéfinie, en particulier le paramètre de fonctionnement de consigne étant sélectionné comme étant de 70-90 %, de préférence 80 % de la limite de réglage.

3. Procédé selon l'une quelconque des revendications précédentes, **caractérisé en ce que** le paramètre de fonctionnement de CONSIGNE et INSTANTANÉ est le régime de la pompe et la limite de réglage est le régime maximum possible ou maximum souhaité de la pompe.

4. Procédé selon la revendication 3, **caractérisé en ce que** dans le cas d'un régime de la pompe déterminé qui est au-dessus d'un régime de consigne souhaité, la température à l'entrée est augmentée, de sorte que le régime de la pompe diminue et dans le cas d'un régime de la pompe déterminé qui est en dessous d'un régime de consigne souhaité, la température à l'entrée est réduite, de sorte que le régime de la pompe augmente.

5. Procédé selon l'une quelconque des revendications précédentes, **caractérisé en ce qu'**un paramètre de fonctionnement de consigne est donné à partir :
a. d'une valeur prédéfinie fixe ou
b. d'un calcul en tenant compte du bilan énergétique de tous les actionneurs et/ou d'un système global et/ou
c. d'un calcul de telle sorte que tous les actionneurs ne soient pas en dessous d'une limite de réglage minimale possible/souhaitée.

6. Procédé selon l'une quelconque des revendications précédentes, **caractérisé en ce que** dans le cas d'un chauffage, en particulier lors d'une transition depuis une diminution pendant la nuit au fonctionnement de jour, les paramètres de fonctionnement d'au moins un nombre partiel de tous les actionneurs sont sélectionnés à l'aide
a. de paramètres de fonctionnement mémorisés antérieurement, en particulier alors qu'un état stable était atteint et/ou
b. d'une limitation à un paramètre de fonctionnement en dessous d'une limite de réglage maximale possible ou maximale souhaitée et/ou à l'aide d'une valeur préalable prioritaire des actionneurs.

7. Procédé selon la revendication 6, **caractérisé en ce que** les paramètres de fonctionnement mémorisés sont dépassés d'une grandeur prédéterminée.

8. Procédé selon l'une quelconque des revendications précédentes, **caractérisé en ce qu'**il est mis en oeuvre dans une boucle de régulation.

9. Procédé selon l'une quelconque des revendications précédentes, **caractérisé en ce que** la température à l'entrée est régulée de manière complémentaire en fonction de la température extérieure.
